# EUROPEAN PATENT APPLICATION

(11) **EP 3 415 744 A1**
(43) Date of publication of application: **19.12.2018**
(21) Application number: 17775241.7
(22) Date of filing: 29.03.2017
(51) Int. Cl.: F02D 13/02, F01L 9/02, F02D 41/04, F02D 43/00, F02D 45/00

(54) **ENGINE CONTROL DEVICE**

(30) Priority: 31.03.2016 JP 2016070466
(71) Applicant: Mazda Motor Corporation, Aki-gun Hiroshima 730-8670 (JP)
(72) Inventor: SUEOKA, Masanari, Aki-gun Hiroshima 730-8670 (JP); HIDAKA, Masatoshi, Aki-gun Hiroshima 730-8670 (JP); TAKAHASHI, Toshiaki, Aki-gun Hiroshima 730-8670 (JP); HASHIGUCHI, Tadasu, Aki-gun Hiroshima 730-8670 (JP)
(74) Representative: Thoma, Michael
(86) International application number: PCT/JP2017/012929
(87) International publication number: WO 2017/170707

(57) **Abstract**

An control device for engine comprising; a variable valve operating mechanism 72 which comprises a cam 72d and a pressure chamber 72c internally filled with engine oil; and a hydraulic valve 72b associated with the pressure chamber 72c and configured to be opened and closed to control the oil pressure to be applied to an intake valve 22. When the engine load falls within a given low engine load range, the valve opening timing of the intake valve 22 is increasingly retarded according to the engine load and as the engine load becomes higher, within a limit of a given timing, and, when the engine load is increased beyond the given low engine load range, the valve opening timing of the intake valve is fixed to the given timing.

## Description

### TECHNICAL FIELD

The present invention relates to an engine control device, and more particularly to an engine control device for controlling opening and closing of an intake valve by a variable valve operating mechanism.

### BACKGROUND ART

In the technical field of engine control devices, there has heretofore been known a technique of adequately controlling valve opening and closing timings of each of an intake valve and an exhaust valve of an engine to thereby enhance engine operation efficiency, particularly, in a compression self-ignition combustion operating range. Further, as a means to control opening and closing of each of an intake valve and an exhaust valve of an engine, there have been known a so-called mechanical valve operating mechanism configured to open and close such an engine valve at constant intervals and in a constant lift amount, according to the shape of a cam nose provided on the surface of a cam, and a variable valve operating mechanism capable of opening and closing such an engine valve at a given timing and a given lift amount (e.g., the following Patent Document 1).

### CITATION LIST

### [Patent Document]

Patent Document 1: JP 2009-121481A

### SUMMARY OF INVENTION

### [Technical Problem]

A variable valve operating mechanism described in the Patent Document 1 comprises: a cam configured to be rotated in synchronization with rotation of a crankshaft; a pressure chamber internally filled with engine oil and configured such that the oil pressure of the engine oil is changed according to movement of the cam; and a hydraulic valve associated with the pressure chamber and configured to be selectively opened and closed to control the oil pressure to be applied to an intake valve. In this variable valve operating mechanism, opening and closing of the intake valve can be controlled by the hydraulic valve, without fully depending on a cam profile.

Meanwhile, in recent years, with a view to improving fuel economy and exhaust emission performance, a technique of switchably using a plurality of different combustion modes of an engine, depending on an operating state of the engine has been often employed. Specifically, under this control, in a low engine load operating range, compression self-ignition combustion control is performed to achieve improvement in fuel economy and improvement in exhaust emission performance, and, in a high engine load operating range, spark-ignition combustion using a spark plug is performed to prevent misfire of the engine. Particularly, in the former case of performing the compression self-ignition combustion control, fuel is basically self-ignited and combusted due to a temperature rise arising from reduction in in-cylinder volume of the engine. Thus, in the course of performing the compression self-ignition combustion control, an in-cylinder temperature of the engine needs to be maintained at a high temperature from before the start of an intake stroke. Further, as a means to maintain the in-cylinder temperature of the engine at a high temperature, a technique of allowing high-temperature burned or combusted gas produced in the last combustion cycle to be held in a cylinder before the start of an intake stroke so as to maintain the in-cylinder temperature, so-called "internal EGR (Exhaust Gas Recirculation) control", is employed.

When the internal EGR control is performed in an engine employing the above variable valve operating mechanism, a ratio of the amount of EGR gas to the amount of fresh air needs to be controlled by controlling a valve opening timing of an intake valve according to engine load. Specifically, as the valve opening timing of the intake valve is retarded, an in-cylinder fresh air rate (the rate of fresh air with respect to a total intake gas in a cylinder) is reduced, and an in-cylinder EGR gas rate (the rate of EGR gas with respect to the total intake gas in the cylinder) is relatively increased. On the other hand, as the valve opening timing of the intake valve is advanced, the in-cylinder fresh air rate is increased, and the in-cylinder EGR gas rate is relatively reduced. Thus, in the low engine road range, it is necessary to retard the valve opening timing of the intake valve in order to ensure a certain amount of EGR gas.

In the above variable valve operating mechanism, in order to retard the valve opening timing of the intake valve in a high engine speed range, it is necessary to control the hydraulic valve to allow the intake valve to be operated without following a profile of the cam nose of the cam being rotated in synchronization with the crankshaft, i.e., to prevent the intake valve from being operated interlockingly with the movement of the cam, even when a pressure inside the pressure chamber is raised by the movement of the cam. Then, after the elapse of a given time since the pressure inside the pressure chamber starts to be raised by the cam, it is necessary to close the hydraulic valve so as to transmit the raised pressure inside the pressure chamber to the intake valve to open the intake valve. In this way, the valve opening timing of the intake valve is retarded with respect to that corresponding to the profile of the cam nose.

However, the control of retarding the valve opening timing of the intake valve involves a problem that hydraulic pulsation occurs, causing a delay in the hydraulic valve opening-closing control. Specifically, in the case where the valve opening timing of the intake valve is retarded using the hydraulic valve, lifting of the intake valve is started by operating the hydraulic valve in a state in which the pressure inside the pressure chamber is raised according to the profile of the cam nose. However, when the lifting of the intake valve is started in the state in which the pressure inside the pressure chamber is raised, as mentioned above, the pressure to be applied to the intake valve is rapidly increased, resulting in the occurrence of hydraulic pulsation in the pressure chamber. The occurrence of the hydraulic pulsation in the pressure chamber leads to a delay in operation of closing the hydraulic valve, resulting in failing to accurately control the lift amount of the intake valve.

The present invention has been made in view of solving the above problem, and an object thereof to provide an engine control device capable of suppressing hydraulic pulsation to thereby accurately control a lift amount of an intake valve.

### [Solution to Technical Problem]

In order to solve the above problem, the present invention provides a control device for an engine, which comprises a variable valve operating mechanism, the variable valve operating mechanism comprises: a cam configured to be rotated in synchronization with a rotation of a crankshaft of the engine: and a pressure chamber internally filled with engine oil and configured such that an oil pressure of the engine oil is changed by a movement of the cam, wherein the pressure chamber is configured such that the oil pressure to be applied to an intake valve of the engine can be controlled by opening and closing a hydraulic valve associated with the pressure chamber, wherein the control device is operable, when the engine performs compression self-ignition combustion, and combusted gas and fresh air are mixed during an intake stroke, to control opening and closing timings of the hydraulic valve such that a valve opening timing of the intake valve during the intake stroke is retarded according to an engine load of the engine, and wherein, when the engine load falls within a given low engine load range, the valve opening timing of the intake valve is increasingly retarded according to the engine load and as the engine load becomes higher, within a limit of a given timing, and, when the engine load is increased beyond the given low engine load range, the valve opening timing of the intake valve is fixed to the given timing.

In the control device of the present invention, the valve opening timing of the intake valve can be retarded according to the engine load. Further, the valve opening timing of the intake valve is increasingly retarded as the engine load becomes higher. Thus, as the engine load becomes higher, a retard amount of the valve opening timing of the intake valve is gradually increased so as to gradually reduce a relative amount of fresh air and gradually increase a relative amount of burned or combusted gas, in a cylinder of the engine. Therefore, the present invention makes it possible to adequately treat combusted gas when the engine load is relatively high.

Further, the above process of retarding the valve opening timing of the intake valve is performed until the engine load reaches a given load, and, when the engine load exceeds the given load, the valve opening timing of the intake valve is fixed to the given timing without being retarded any more. In this way, a limit value according to the engine load is set in regard to the control of retarding the valve opening timing of the intake valve, so that it becomes possible to prevent the pressure inside the pressure chamber from being violently transmitted to the intake valve

More specifically, when retarding the valve opening timing of the intake valve, a timing at which a change in pressure inside the pressure chamber according to the profile of a cam nose of the cam is transmitted to the intake valve is retarded by retarding the closing timing of the hydraulic valve. Then, as the closing timing of the hydraulic valve is increasingly retarded, a value of the pressure to be transmitted to the intake valve upon closing the hydraulic valve is more rapidly increased. In the present invention, the control of retarding the valve opening timing of the intake valve is executed only when the engine load is equal to or less than the given load, i.e., the valve opening timing of the intake valve is not retarded when the pressure inside the pressure chamber to be transmitted to the intake valve becomes excessively large. This makes it possible to suppress the situation where the occurrence of hydraulic pulsation occurs in the pressure chamber.

Preferably, in the control device of the present invention, the given timing is increasingly advanced as an engine speed of the engine becomes higher.

Preferably, the control device of the present invention is operable to reduce an opening angle of a throttle valve of the engine when an engine speed of the engine exceeds a given rotational speed.

According to this feature, until the engine speed reaches the given rotational speed, the valve opening timing of the intake valve is retarded as described above. Then, when the engine speed exceeds the given rotational speed, the opening angle of the throttle valve is reduced to thereby reduce the amount of fresh air to be introduced into the cylinder through the intake valve so as to increase a relative amount of combusted gas.

Preferably, the control device of the present invention is operable to close an exhaust shutter valve of the engine when an engine speed of the engine exceeds a given rotational speed.

According to this feature, until the engine speed reaches the given rotational speed, the valve opening timing of the intake valve is retarded as described above. Then, when the engine speed exceeds the given rotational speed, the exhaust shutter valve is closed to thereby allow combusted gas discharged from the cylinder once to be held in the vicinity of an engine body of the engine. Then, a relative amount of combusted gas in the cylinder can be increased by re-introducing, into the cylinder, the combusted gas held in the vicinity of the engine body.

### [Effect of Invention]

As above, the control device of the present invention can suppress the hydraulic pulsation to thereby accurately control a lift amount of the intake valve.

### BRIEF DESCRIPTION OF DRAWINGS

FIG. 1 is a schematic configuration diagram of an engine system according to one embodiment of the present invention.
FIG. 2 is a schematic side view of an intake-side variable valve operating mechanism to be applied to an intake valve of an engine in the engine system according to this embodiment.
FIG. 3 is a schematic side view depicting a cam of the intake-side variable valve operating mechanism in the engine system according to this embodiment.
FIG. 4 is a control block diagram of the engine system according to this embodiment.
FIG. 5 is an explanatory diagram of an operating range of the engine in the engine system according to this embodiment.
FIG. 6 is an explanatory diagram of basic movements of the intake valve and the intake valve in the engine system according to this embodiment.
FIG. 7 is an explanatory diagram of characteristics of the intake-side variable valve operating mechanism in the engine system according to this embodiment.
FIG. 8 is an explanatory diagram of movements of the intake valve and the exhaust valve in the engine system according to this embodiment.
FIG. 9 is a flow chart of processing for determining a lift start timing of the intake valve in the engine system according to this embodiment.

### DESCRIPTION OF EMBODIMENTS

With reference to the accompanying drawings, an engine system according to one embodiment of the present invention will now be described.

### [Configuration of Engine System]

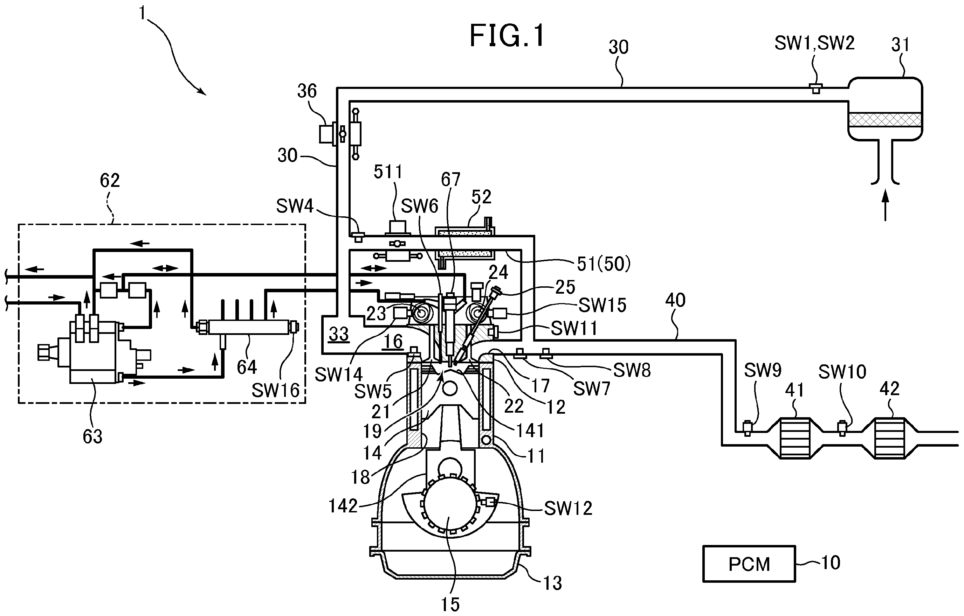

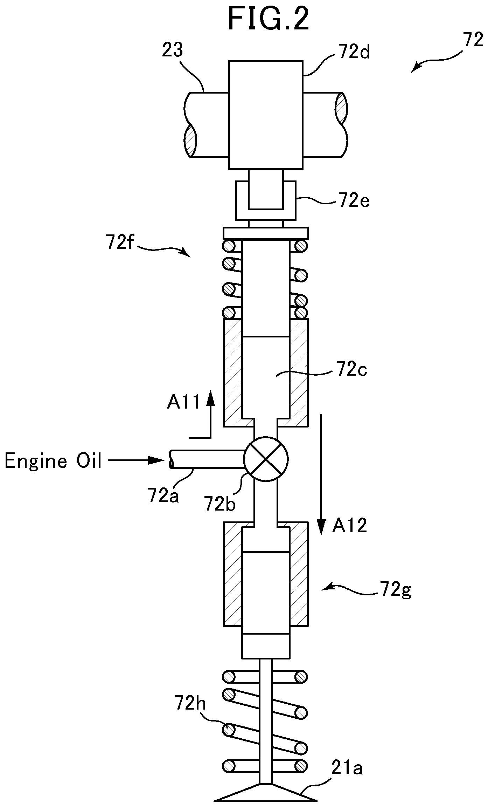

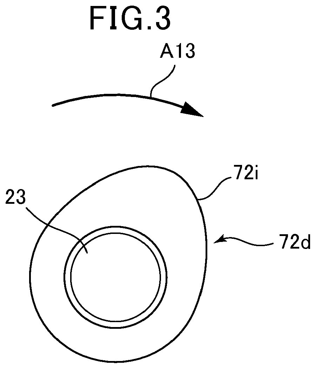

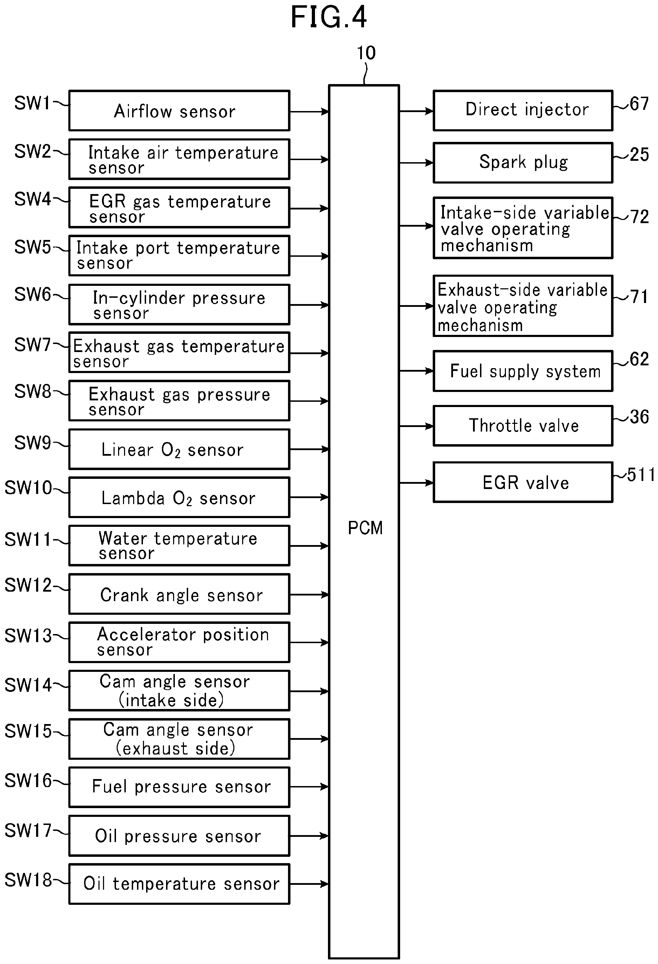

First of all, with reference to FIGS. 1 to 4, the configuration of the engine system according to this embodiment will be described. FIG. 1 is a schematic configuration diagram of the engine system according to this embodiment, and FIG. 2 is a schematic (partial cross-sectional) side view of an exhaust-side variable valve operating mechanism to be applied to an intake valve of an engine in the engine system according to this embodiment. FIG. 3 is a schematic side view depicting a cam of the intake-side variable valve operating mechanism in the engine system according to this embodiment, and FIG. 4 is a control block diagram of the engine system according to this embodiment.

As depicted in FIG. 1, an engine 1 is a gasoline engine which is mounted to a vehicle, and configured to be supplied with fuel containing at least gasoline. The engine 1 comprises: a cylinder block 11 provided with a plurality of cylinders 18 (although FIG. 1 depicts only one cylinder, the cylinder block 11 is actually provided with a plurality of, e.g., four, cylinders, in an in-line arrangement); a cylinder head 12 disposed on the top of the cylinder block 11; and an oil pan 13 disposed under the cylinder block 11 and storing lubricant therein. Each of the cylinders 18 is provided with a piston 14 which is connected to a crankshaft 15 via a connecting rod 142, and fittingly inserted in the cylinder 18 in a reciprocatingly movable manner. The piston 14 has a top surface provided with a cavity 141 like a re-entrant type cavity in a diesel engine. The cavity 141 is configured to be opposed to an aftermentioned injector 67 when the piston 14 is located around a top dead center position on a compression stroke. The cylinder head 12, the cylinder 18, and the piston 14 having the cavity 141 define a combustion chamber 19. Here, it is to be noted that the shape of the combustion chamber 19 is not limited to the depicted shape. For example, the shape of the cavity 141, the shape of the top surface of the piston 14, the shape of a ceiling surface of the combustion chamber 19 and the like may be appropriately changed.

With a view to improvement in theoretical thermal efficiency, stabilization of aftermentioned compression ignition combustion, and others, the engine 1 is configured to have a relatively high geometrical compression ratio of 15 or more. Here, it is to be noted that the geometrical compression ratio may be appropriately set in the range of about 15 to 20.

With respect to each of the cylinders 18, the cylinder head 12 is formed with an intake port 16 and an exhaust port 17. The intake port 16 and the exhaust port 17 are provided, respectively, with an intake valve 21 and an exhaust valve 22 for opening and closing respective openings of the intake and exhaust ports on the side of the combustion chamber 19. More specifically, as depicted in FIG. 2, with respect to each of the cylinders 18, the cylinder head 12 is formed with two intake ports 16 which are provided, respectively, with two intake valves 21(21a, 21b), and two exhaust ports 17 which are provided, respectively, with two exhaust valves 22(22a, 22b).

The intake valve 21 is provided with an intake-side variable valve operating mechanism 72 (see FIG. 4) which is configured to change valve opening and closing timings and/or lift amount of the intake valve 21.

As depicted in FIG. 2, the intake-side variable valve operating mechanism 72 to be applied to the intake valve 21 comprises: an oil supply passage 72a for allowing engine oil supplied from the outside to pass therethrough; a solenoid valve 72b (which is equivalent to a hydraulic valve) provided on the oil supply passage 72a and configured as a three-way valve; and a pressure chamber 72c to be filled with engine oil supplied from the oil supply passage 72a via the solenoid valve 72b. In this example, when the solenoid valve 72b is opened, the oil supply passage 72a and the pressure chamber 72c are fluidically communicated with each other, so that engine oil is supplied from the oil supply passage 72a to the pressure chamber 72c (see the arrowed line A11 in FIG. 2). The solenoid valve 72b is configured to be opened in a non-energized state, and closed in an energized state. More specifically, the solenoid valve 72b is configured such that a closed state thereof is maintained when it is continued to be energized. Further, a non-depicted one-way valve or the like is provided on a part of the oil supply passage 72a located upstream of the solenoid valve 72b.

The intake-side variable valve operating mechanism 72 further comprises: a cam 72d provided on an intake camshaft 23 to which rotation of the crankshaft 15 is transmitted via a timing belt or the like; a roller finger follower 72e configured to be swung by a force transmitted from the cam 72d; and a pumping unit 72f coupled to the pressure chamber 72c and configured to be moved by the roller finger follower 72e so as to raise the pressure of engine oil (oil pressure) inside the pressure chamber 72c. In addition, the intake-side variable valve operating mechanism 72 comprises a braking unit 72g coupled to the pressure chamber 72c via the solenoid valve 72b and operable to be activated by the oil pressure inside the pressure chamber 72c, so as to open the intake valve 21, and a valve spring 72h giving a force for maintaining the intake valve 21 in its closed state when the braking unit 72g is not activated. In this intake-side variable valve operating mechanism 72, when the solenoid valve 72b is closed, the fluidic communication between the oil supply passage 72a and the pressure chamber 72c is shut off, and simultaneously the pressure chamber 72c and the braking unit 72g are fluidically communicated with each other, so that the oil pressure inside the pressure chamber 72c is applied to the braking unit 72g (see the arrowed line A12 in FIG. 2).

As depicted in FIG. 3, the cam 72d is fixed onto the crankshaft 23, and configured to be rotated in synchronization with the crankshaft 23 in the arrowed line A13. Then, when the cam 72d is rotated, a rotation-directionally leading-side edge face 72i of a cam nose of the cam 72d acts on the roller finger follower 72e.

The operation of the intake-side variable valve operating mechanism 72 for opening the intake valve 21 will be specifically described. In the course of rotation of the cam 72d in synchronization with the intake camshaft 23, when the cam nose (i.e., cam lobe) formed in the cam 72d is brought into contact with the roller finger follower 72e, the cam nose pushes the roller finger follower 72e during contact between the leading-side edge face 72i of the cam nose and the roller finger follower 72e. Thus, the roller finger follower 72e biases the pumping unit 71f, such that the pumping unit 71f operates to compress the engine oil inside the pressure chamber 71c. Thus, the oil pressure inside the pressure chamber 71c is raised. When the solenoid valve 72b is closed in this situation, the raised oil pressure inside the pressure chamber 72c is applied to the braking unit 72g, and the braking unit 72g biases the intake valve 21, so that the intake valve 21 is lifted, i.e., the intake valve 21 is opened.

Basically, the intake valve 21 can be opened by closing the solenoid valve 72b at a certain timing during a period during which the leading-side edge face 72i of the cam nose formed in the cam 72d acts on the roller finger follower 72e. Therefore, the valve opening timing of the intake valve 21 can be changed by changing a timing at which the solenoid valve 72b is switched from the open state to the closed state. Further, in this embodiment, the cam nose is formed in a given position on the cam 72d so as to open the intake valve 21 in an intake stroke.

An exhaust-side variable valve operating mechanism 71 to be applied to the exhaust valve 22 has the same configuration as that of the intake-side variable valve operating mechanism 72. That is, a cam nose is formed in a given position on a cam of the exhaust-side variable valve operating mechanism 71 so as to open the exhaust valve 22 in an exhaust stroke. Further, in a case where the exhaust valve 22 is additionally opened in an intake stroke to execute so-called "exhaust valve two-time opening control", as described later, an additional cam nose is formed in a given position on the cam of the exhaust-side variable valve operating mechanism 71. This exhaust valve two-time opening control is executed when it is necessary to cause flow-back and re-introduction of combusted gas (internal EGR gas) from the exhaust port 17 into the combustion chamber 19.

Referring to FIG. 1 again, with respect to each of the cylinders 18, the cylinder head 12 is provided with an injector 67 for injecting fuel directly into the cylinder18 (direct injector). The injector 67 is disposed such that a nozzle hole thereof faces the inside of the combustion chamber 19, from a central region of the ceiling surface of the combustion chamber 19. The injector 67 is operable to inject fuel directly into the combustion chamber 19, at an injection timing set according to an operating state of the engine 1 and in an amount according to the operating state of the engine 1. In this example, the injector 67 is a multi-hole injector having a plurality of nozzle holes, although its detailed depiction will be omitted. Thus, the injector 67 is operable to inject fuel such that fuel mist spreads in a radial pattern from a central position of the combustion chamber 19. Fuel mist injected to spread in a radial pattern from the central position of the combustion chamber 19 at a timing at which the piston 14 is located around a top dead center position on a compression stroke flows along a wall surface of the cavity 141 formed in the top surface of the piston. That is to say that the cavity 141 is formed such that it can receive therein fuel mist injected at a timing at which the piston 14 is located around a top dead center position on a compression stroke. A combination of this multi-hole injector 67 and the cavity 141 is advantageous in shortening an air-fuel mixture formation period after injection of fuel, and shortening a combustion period. Here, it is to be noted that the injector 67 is not limited to the multi-hole injector, but may be an outwardly lifting valve injector.

A non-depicted fuel tank and the injector 67 are coupled together by the fuel supply line extending therebetween. In the fuel supply line, a fuel supply system 62 is inserted which comprises a fuel pump 63 and a common rail 64 and is capable of supplying fuel to the injector 67 at a relatively high fuel pressure. The fuel pump 63 is capable of pumping fuel from the fuel tank to the common rail 64, and the common rail 64 is capable of storing the pumped fuel at a relatively high fuel pressure. In response to opening of the injector 67, fuel stored in the common rail 64 is injected from the nozzle holes of the injector 67. Here, the fuel pump 63 is a plunger pump, which is configured to be driven by the engine 1, although depiction is omitted. The fuel supply system 62 comprising the engine-driven pump enables fuel having a high fuel pressure of 30 MPa or more to be supplied to the injector 67. The fuel pressure may be set to about 120 MPa at a maximum. The pressure of fuel to be supplied to the injector 67 is changed according to the operating state of the engine 1. Here, it is to be noted that the fuel supply system 62 is not limited to this configuration.

The cylinder head 12 is further provided with a spark plug 25 for forcibly igniting (specifically, spark-igniting) an air-fuel mixture in the combustion chamber 19. In this example, the spark plug 25 is disposed to penetrate through the cylinder head 12 while extending obliquely downwardly from an exhaust side of the engine 1. Further, the spark plug 25 is disposed such that a distal end thereof faces the inside of the cavity 141 of the piston 14 when the piston 14 is located at a top dead center position on a compression stroke.

With respect to each of the cylinders 18, an intake passage 30 is connected to one of opposite lateral surfaces of the cylinder head 12 of the engine 1, in such a manner as to be communicated with the intake port 16, as depicted in FIG. 1. On the other hand, an exhaust passage 40 for discharging burned or combusted gas (exhaust gas) from the combustion chamber 19 is connected to the other lateral surface of the cylinder head 12 of the engine 1.

The intake passage 30 is provided with an air cleaner 31 for filtering intake air, at an upstream end thereof, and a throttle valve 36 for adjusting the amount of intake air to each of the cylinders 18, on a downstream side of the air cleaner 31. The intake passage 30 is further provided with a surge tank 33, at a position adjacent to a downstream end of the intake passage 30. A part of the intake passage 30 located downstream of the surge tank 33 is formed as a plurality of independent passages each branched with respect to a respective one of the cylinders 18. Each of the independent passages has a downstream end connected to a respective one of the intake ports 16 in the cylinders 18.

An upstream part of the exhaust passage 40 is formed as an exhaust manifold which comprises: a plurality of independent passages each branched with respect to a respective one of the cylinders 18 and each connected to an outer end of a respective one of the exhaust ports 17; and a collector portion in which the independent passages are collected together. At positions downstream of the exhaust manifold, the exhaust passage 40 is provided with a direct catalyst 41 and an underfoot catalyst 42 each serving as an exhaust gas purification device for purifying harmful components contained in exhaust gas. Each of the direct catalyst 41 and the underfoot catalyst 42 comprises a tubular casing, and a catalyst, such as three-way catalyst, disposed in a flow path inside the casing.

A region of the intake passage 30 located between the surge tank 33 and the throttle valve 36 and a region of the exhaust passage 40 located upstream of the direct catalyst 41 are connected to each other via an EGR passage 50 for recirculating part of exhaust gas to the intake passage 30. The EGR passage 50 comprises a main passage 51 provided with an EGR cooler 52 for cooling exhaust gas by engine cooling water. The main passage 51 is further provided with an EGR valve 511 for adjusting a recirculation amount of exhaust gas to the intake passage 30.

The engine 1 is configured to be controlled by a powertrain control module (hereinafter referred to as "PCM") 10 as a control means. The PCM 10 is composed of a microprocessor comprising a CPU, a memory, a counter timer group, an interface, and paths connecting these units. This PCM 10 forms a controller.

As depicted in FIGS. 1, 2 and 4, the PCM 10 is configured to accept an input of detection signals of various sensors SW1, SW2, SW4 to SW18. Specifically, the PCM 10 is configured to accept an input of: a detection signal of an airflow sensor SW1 disposed downstream of the air cleaner 31 and operable to detect the flow rate of fresh air; a detection signal of an intake air temperature sensor SW2 disposed downstream of the air cleaner 31 and operable to detect the temperature of fresh air; a detection signal of an EGR gas temperature sensor SW4 disposed in the EGR passage 50 at a position adjacent to the connection with the intake passage 30 and operable to detect the temperature of external EGR gas; a detection signal of an intake port temperature sensor SW5 installed to each of the intake ports 16 and operable to detect the temperature of intake air just before flowing into each of the cylinders 18; a detection signal of an in-cylinder pressure sensor SW6 installed to the cylinder head 12 and operable to detect a pressure inside the cylinder 18 (in-cylinder pressure); detection signals of an exhaust gas temperature sensor SW7 and an exhaust gas pressure sensor SW8 each disposed in the exhaust passage 40 at a position adjacent to the connection with the EGR passage 50 and operable to detect the temperature and pressure of exhaust gas, respectively; a detection signal of a linear O₂ sensor SW9 disposed upstream of the direct catalyst 41 and operable to detect the concentration of oxygen contained in exhaust gas; a detection signal of a lambda O₂ sensor SW10 disposed between the direct catalyst 41 and the underfoot catalyst 42 and operable to detect the concentration of oxygen in exhaust gas; a detection signal of a water temperature sensor SW11 operable to detect the temperature of engine cooling water; a detection signal of a crank angle sensor SW12 operable to detect a rotational angle of the crankshaft 15; a detection signal of an accelerator position sensor SW13 operable to detect an accelerator position corresponding to the amount of manipulation of an accelerator pedal (depiction is omitted) of a vehicle; detection signals of intake-side and exhaust-side cam angle sensors SW14, SW15; a detection signal of a fuel pressure sensor SW16 installed to the common rail 64 of the fuel supply system 62 and operable to detect the pressure of fuel to be supplied to the injector 67; a detection signal of an oil pressure sensor SW17 operable to detect the oil pressure in the engine 1; and a detection signal of an oil temperature sensor SW18 operable to detect an oil temperature in the engine 1.

The PCM 10 is operable to perform various calculations based on the above detection signals to thereby determine states of the engine 1 and the vehicle, and output control signals, respectively, to the (direct) injector 67, the spark plug 25, the intake-side variable valve operating mechanism 72, the exhaust-side variable valve operating mechanism 71, the fuel control system 62, and actuators of various valves (the throttle valve 36, the EGR valve 511, etc.). In this way, the PCM 10 controls the operation of the engine 1. Particularly, in this embodiment, the PCM 10 is operable to output a control signal to the solenoid valve 72b of the intake-side variable valve operating mechanism 72 (specifically, supply a voltage or current to the solenoid valve 72b) to switch between the open and closed states of the solenoid valve 72b to thereby execute control of changing the valve opening and closing timings of the intake valve 21.

### [Operating Range]

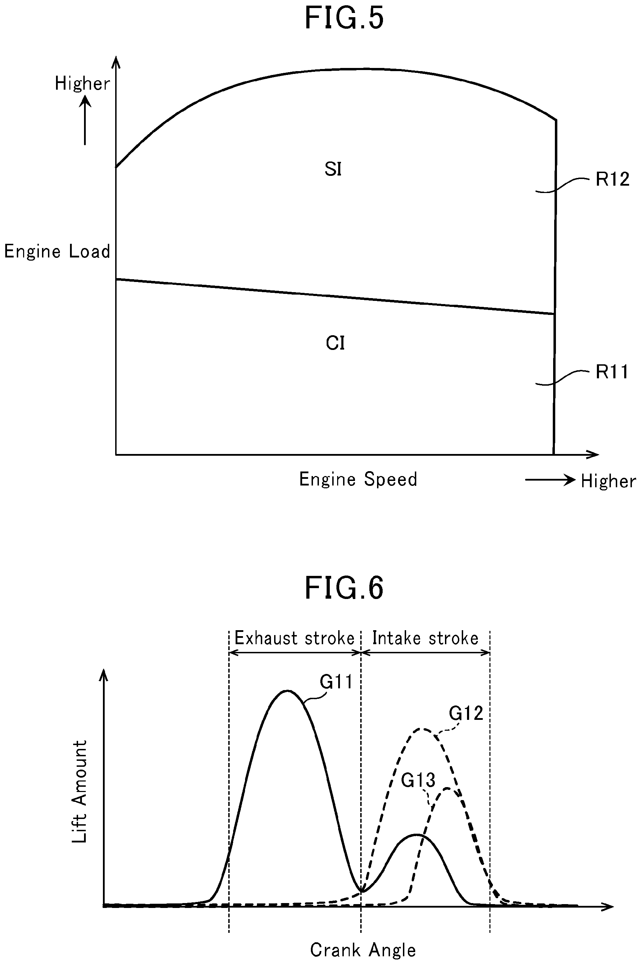

Next, with reference to FIG. 5, the operating range of the engine 1 in the engine system according to this embodiment will be described. FIG. 4 depicts one example of an operation control map of the engine 1. This engine 1 is configured such that, in a first operating range R11 which is a low engine load range having a relatively low engine load, compression-ignition combustion by compression self-ignition is performed without performing spark-ignition by the spark plug 25, in order to improve fuel economy and exhaust emission performance. However, when the engine load of the engine is increased, the compression-ignition combustion leads to excessively steep combustion, resulting in the occurrence of combustion noise and/or difficulty in controlling self-ignition timing (misfire or the like is apt to occur). For this reason, the engine 1 is configured such that, in a second operating range R12 which is a high engine load range having a relatively high engine load, forced-ignition combustion (in this example, spark-ignition combustion) using the spark plug 25 is performed, instead of the compression-ignition combustion. As above, the engine 1 is configured to switch between a CI (Compression Ignition) operation as engine operation by the compression-ignition combustion, and an SI (Spark Ignition) operation as engine operation by the spark-ignition combustion, according to the operating state of the engine 1, particularly, the engine load of the engine 1.

Here, with reference to FIG. 6, basic movements of the intake valve 21 and the exhaust valve 22 (particularly, the exhaust valve 21 to which the intake-side variable valve operating mechanism 72 is applied) will be described. In FIG. 5, the horizontal axis represents crank angle, and the vertical axis represents valve lift amount. Further, a graph G11 indicated by the solid line shows the movement of the exhaust valve 22 according to the crank angle, and graphs G12 and G13 indicated by the dashed lines show the movements of the intake valve 21 according to the crank angle. In the first operating range R11 in which the CI operation is performed, the exhaust valve two-times opening control of opening the exhaust valve 22 during an exhaust stroke and during an intake stroke by the exhaust-side variable valve operating mechanism 71 is executed, as depicted in FIG. 5, to introduce, into the combustion chamber 18, internal EGR gas having a relatively high temperature. In this way, during the CI operation, a compression end temperature of the inside of the cylinder 18 is raised to enhance ignitability and stability of the compression-ignition combustion. Further, in an intake stroke, the valve opening timing of the intake valve 21 is controlled by the intake-side variable valve operating mechanism 72, such that it operates at a timing indicated, e.g., by a graph G12 or G13, according to the engine load.

### [Movement of Intake Valve]

Next, the movement of the intake valve 21 in the engine system according to this embodiment will be specifically described.

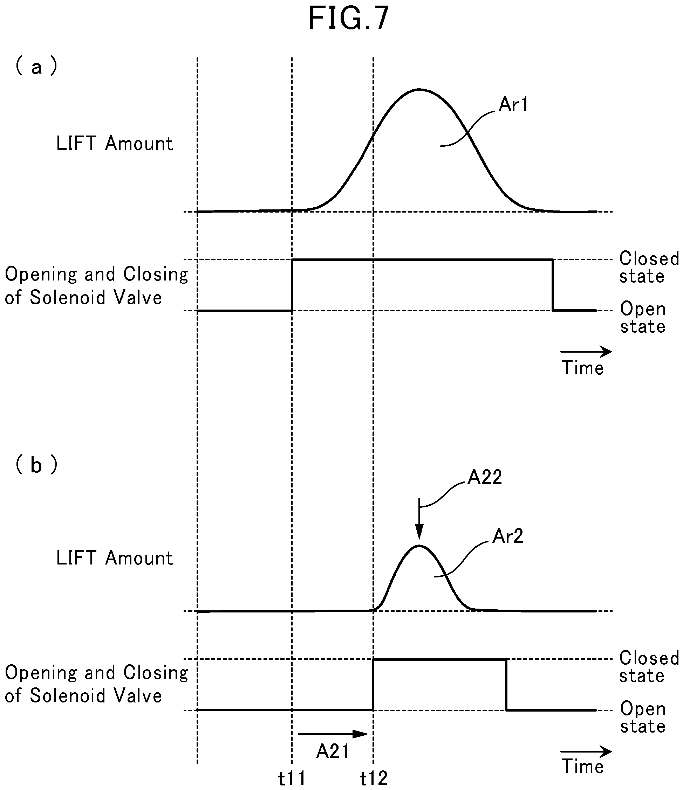

First of all, with reference to FIG. 7, characteristics of the exhaust-side variable valve operating mechanism 72 for moving the intake valve 21 will be described.

FIG. 7(a) depicts, on the upper side thereof, the movement (lift curve) of the intake valve 21 in a case where the intake valve 21 is opened at a relatively early timing t11 by the intake-side variable valve operating mechanism 72, and further depicts, on the lower side thereof, the open and closed states of the solenoid valve 72b of the intake-side variable valve operating mechanism 72 in the case where the intake valve 21 is moved as above. For example, the valve opening timing t11 is a valve opening timing when the valve opening timing is maximally advanced by the intake-side variable valve operating mechanism 71 (this valve opening timing will hereinafter be appropriately referred to as "maximally advanced timing"). On the other hand, FIG. 7(b) depicts on the upper side thereof, the movement (lift curve) of the intake valve 21 in a case where the intake valve 21 is opened at a relatively late timing t12, specifically, at a timing t12 retarded from the valve opening timing t11 indicated in FIG. 7(a) (see the arrowed line A21), by the intake-side variable valve operating mechanism 71, and further depicts, on the lower side thereof, the open and closed states of the solenoid valve 72b of the intake-side variable valve operating mechanism 71 in the case where the intake valve 21 is moved as above. Further, for comparison, the lift curve depicted on the upper side of FIG. 7(a) is superimposedly indicated by the dashed line on FIG. 7(b).

Comparing FIG. 7(a) with FIG. 7(b), it is understandable that when the valve opening timing of the intake valve 21 is retarded, the lift amount of the intake valve 21 is reduced (see the arrowed line A22). It is also understandable that a lift amount integration value of the intake valve 21 corresponding to an area designated by the reference sign Ar2 is less than a lift amount integration value of the intake valve 21 corresponding to an area designated by the reference sign Ar1. The reason why when the valve opening timing of the intake valve 21 is retarded, each of the lift amount and the lift amount integration value is reduced is as follows.

As mentioned above, in the intake-side variable valve operating mechanism 72, when the cam nose formed on the cam 72a is in contact with the roller finger follower 72e, the cam nose pushes the roller finger follower 72e, and thereby the oil pressure inside the pressure chamber 72c is raised by the pumping unit 72f. Then, upon closing of the solenoid valve 72b when the cam nose formed on the cam 72a is acting on the roller finger follower 72e, the raised oil pressure inside the pressure chamber 72c is applied to the intake valve 21 through the braking unit 72g, so that the intake valve 21 is opened. In this process, the oil pressure inside the pressure chamber 72c will be gradually raised after the cam nose of the cam 72a starts to act on the roller finger follower 72e. Then, after an apex of the cam nose reaches the roller finger follower 72e, the oil pressure inside the pressure chamber 72c will be gradually lowered.

Thus, at a given timing in an initial phase in which the cam nose of the cam 72d starts to act on the roller finger follower 72e, the oil pressure inside the pressure chamber 72c is raised. That is, when the solenoid valve 72b is closed at this timing, the pressure inside the pressure chamber is raised from a relatively early timing, so that the exhaust valve 22 starts to be opened at a relatively early timing, and subsequently lifted in accordance with movement of the pumping unit pushed by the cam nose. Therefore, each of the lift amount and the lift amount integration value is maximized (see FIG. 7(a)). In this situation, the valve opening timing of the intake valve 21 at which each of the lift amount and the lift amount integration value of the intake valve 21 is maximized is defined as a maximally advanced timing of the intake valve 21. On the other hand, when the valve opening timing of the intake valve 21 is retarded from such a maximally advanced timing, the pressure (peak pressure) inside the pressure chamber 72 is lowered, and thus a force to be given to the intake valve is reduced. Therefore, each of the lift amount and the lift amount integration value of the intake valve 21 is reduced (see FIG. 7(b)).

The lift amount integration value of the intake valve 21 is substantially equivalent to the amount of fresh air to be introduced into the cylinder 18. Thus, the amount of fresh air to be introduced into the cylinder 18 can be substantially controlled by controlling the closing timing of the solenoid valve 72b of the intake-side variable valve operating mechanism 72.

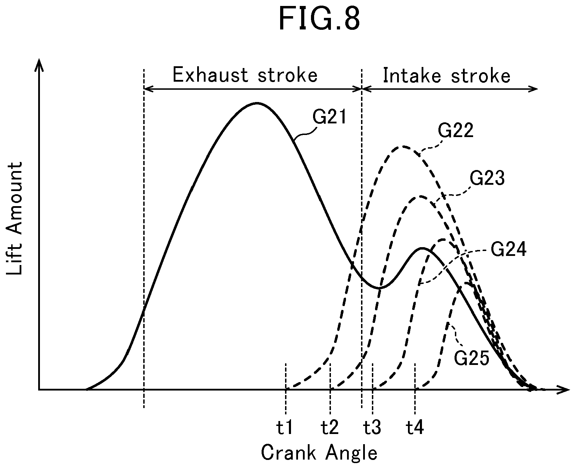

FIG. 8 depicts a relationship between the lift amount of each of the intake valve and the exhaust valve and the crank angle during the CI operation. In FIG. 8, a graph G21 indicated by the solid line shows the movement of the exhaust valve 22, and graphs G22 to G25 indicated by the dashed lines show the movements of the intake valve 21. As depicted in FIG. 7, in an exhaust stroke, the exhaust valve 22 is operated such that the lift amount is first increased to increase a valve opening amount, and, after the lift amount reaches a maximum value, the valve opening amount is reduced. Then, the lift amount of the exhaust valve 22 is increased once in a subsequent intake stroke. That is, so-called "exhaust valve two-time opening control" is executed. In this way, combusted gas discharged from the inside of the cylinder 18 in an exhaust stroke is returned as internal EGR gas to the inside of the cylinder 18.

On the other hand, the intake valve 21 is operated, e.g., along one of the lift curves of the graphs G22 to G25, according to the engine load. The graphs G22 to G25 are different in terms of a lift start timing (valve opening timing). Thus, each of the lift amount and the lift amount integration value of the intake valve 21 can be controlled, e.g., by controllably setting the lift start timing of the intake valve 21 to one of timings t1 to t4.

Further, the lift start timings t1 to t4 are values preliminarily determined according to engine speed. Specifically, as the engine speed becomes higher, the lift start timing is increasingly retarded. On the other hand, as the engine speed becomes lower, the lift start timing is increasingly advanced. That is, as the engine speed becomes higher, the amount of EGR gas in the cylinder 18 can be gradually increased with respect to the amount of fresh air, to gradually increase a relative amount of EGR gas in the cylinder 18. Thus, when the engine speed is relatively high, the lift start timing of the intake valve 21 is retarded, e.g., set to the timing t4, so as to introduce fresh air in an amount corresponding to the lift amount integration value defined by the lift curve of the graph G25. In this way, it becomes possible to increase the relative amount of EGR gas in the cylinder 18.

On the other hand, when the engine speed is relatively low, it is required to increase the amount of fresh air in the cylinder 18 with respect to the amount of EGR gas. Thus, when the engine speed is relatively low, the lift start timing of the intake valve 21 is advanced, e.g., set to the timing t1, so as to introduce fresh air in an amount corresponding to the lift amount integration value defined by the lift curve of the graph G22. In this way, it becomes possible to increase a relative amount of fresh air with respect to the amount of EGR gas.

Theoretically, the lift start timing of the intake valve 21 can be retarded to a timing within a period during which the leading-side edge face 72i of the cam nose is in contact with the roller finger follower 72e, i.e., to a timing just before the apex of the cam nose is brought into contact with the roller finger follower 72e. However, if the solenoid valve 72b is maintained in the open state to retard the lift start timing of the intake valve 21, the pressure inside the pressure chamber 72c continues to raise during the period during which the leading-side edge face 72i of the cam nose acts on the roller finger follower 72e. Then, after the elapse of a given time since the leading-side edge face 72i of the cam nose starts to act on the roller finger follower 72e, the pressure inside the pressure chamber 72c is raised to a relatively high value. If the solenoid valve 72b is closed to start lifting of the intake valve 21 in this state, the closing operation of the solenoid valve 72b can cause the occurrence of hydraulic pulsation in the pressure chamber 72 as a closed chamber, resulting in delay of the movement of the solenoid valve 72b. Therefore, in this embodiment, the PCM 10 is configured to prevent the lift start timing of the intake valve 21 from being retarded any more, after the pressure inside the pressure chamber 72c is raised to a relatively high value, i.e., after the elapse of the given time since the leading-side edge face 72i of the cam nose starts to act on the roller finger follower 72e. For example, in FIG. 8, assume that the time t3 is the latest value (retard limit) of the lift start timing of the intake valve 21. Further, assume that the engine speed is currently relatively high, and thus the lift start timing of the intake valve 21 according to the engine speed is determined as the time t4 by the PCT 10. In this situation, the PCM 10 is operable, based on detecting that the lift start timing t4 is later than the latest timing t3, to start the lifting of the intake valve 21 at the time t3, irrespective of the determined time t4. This makes it possible to prevent the solenoid valve 72b from starting to be operated in the state in which the pressure inside the pressure chamber 72c is relatively high, thereby suppressing the occurrence of hydraulic pulsation in the pressure chamber 72c.

In the above embodiment, when the engine speed exceeds a given rotational speed, it is desired to increase a relative amount of EGR gas in the cylinder 18. In this situation, an opening angle of the throttle valve 36 may be reduced to reduce the amount of fresh air to be introduced into the cylinder 18, in addition to the control of retarding the lift start timing of the intake valve 21. By reducing the opening angle of the throttle valve 36, it is possible to reduce the amount of fresh air to be introduced into the cylinder 18 to thereby increase the relative amount of EGR gas.

Alternatively, in the situation where the engine speed exceeds the given rotational speed and thus it is desired to increase the relative amount of EGR gas in the cylinder 18, an exhaust shutter valve provided just after the exhaust valve 24 of the engine may be closed during an exhaust stroke of the cylinder 18. In this case, it is possible to allow combusted gas discharged during an exhaust stroke to be held between the exhaust valve 24 and the exhaust shutter valve, and then effectively introduced into the cylinder 18 by opening the exhaust valve 24.

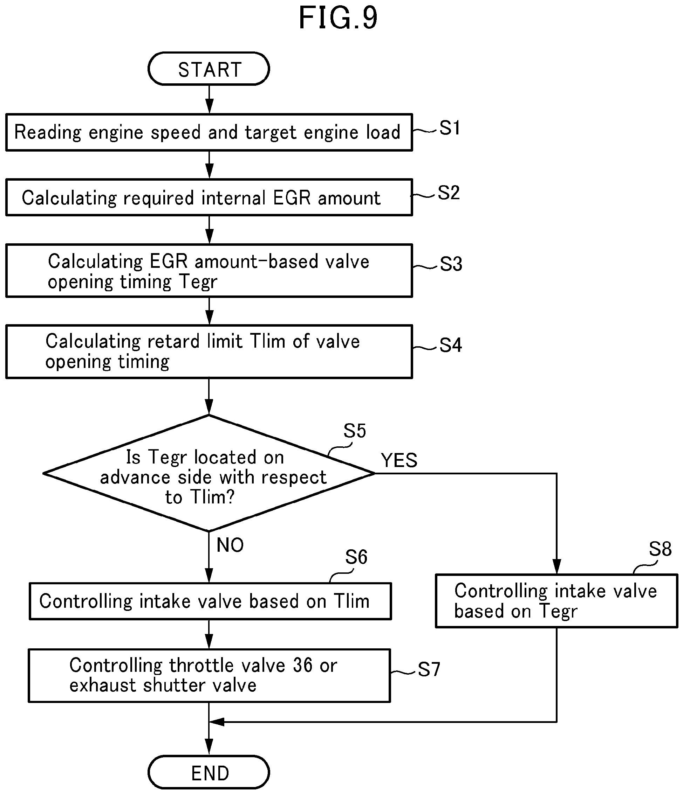

Next, a specific control for determining the lift start timing of the intake valve 21 will be described in detail. FIG. 9 is a flow chart of processing for determining the lift start timing of the intake valve.

Upon start of a series of processing, in step S1, the PCM 10 operates to read a current value of the engine speed of the engine 1, and a target engine load based on a current value of the accelerator position. Then, in step S2, the PCM 10 operates to calculate, based on the engine speed and the engine load, a required internal EGR amount necessary for the engine 1 to achieve the compression self-ignition combustion at the target engine load. Then, in step S3, the PCM 10 operates to calculate an EGR amount-based valve opening timing Tegr of the intake valve 21 based on a lift amount integration value necessary to achieve the calculated required internal EGR amount.

Subsequently, in step S4, the PCM operates to calculate, based on the engine load, a retard limit Tlim (a crank angle timing at the time t4, in the aforementioned example) of the valve opening timing of the intake valve 21. Then, in step S5, the PCM 10 operates to compare the calculated EGR amount-based valve opening timing Tegr with the retard limit Tlim to determine whether or not the EGR amount-based valve opening timing Tegr is located on an advance side with respect to the retard limit Tlim.

As a result, when the EGR amount-based valve opening timing Tegr is not located on the advance side with respect to the retard limit Tlim, the PCM operates to control the valve opening timing of the intake valve 21 based on the retard limit Tlim which is the latest value thereof. Then, in step S7 as an optional step, the PCM 10 operates to control the opening angle of the throttle valve 36 or the exhaust shutter valve to enhance combusted gas introduction efficiency.

On the other hand, when the EGR amount-based valve opening timing Tegr is located on the advance side with respect to the retard limit Tlim, the PCM operates to control the intake valve 21 based on the retard limit Tlim based on the EGR amount-based valve opening timing Tegr.

As above, in this embodiment, the valve opening timing of the intake valve can be retarded according to the engine speed. Further, the valve opening timing of the intake valve is increasingly retarded as the engine speed becomes higher. Thus, as the engine speed becomes higher, a retard amount of the valve opening timing of the intake valve is gradually increased so as to gradually reduce a relative amount of fresh air and gradually increase a relative amount of burned or combusted gas, in a cylinder of the engine. Therefore, the present invention makes it possible to adequately treat combusted gas when the engine speed is relatively high.

Thus, in this embodiment, when executing the compression self-ignition combustion control, the valve opening timing of the intake valve 21 during an intake stroke can be increasingly retarded as the engine speed of the engine 1 becomes higher, by the intake-side variable valve operating mechanism 71. By retarding the valve opening timing of the intake valve 21 during an intake stroke, it becomes possible to restrict the amount of fresh air to be introduced into the cylinder 18 to increase the relative amount of EGR gas in the cylinder 18. This makes it possible to maintain the temperature inside the cylinder 18 to enhance efficiency of the compression self-ignition combustion.

In the above embodiment, the control of returning exhaust gas discharged from the inside of the cylinder 18, to the inside of the cylinder 18 as internal EGR gas, so-called "exhaust valve two-time opening control" is performed. Alternatively, combusted gas may be held in the cylinder 18 by performing so-called "negative valve overlap (NVO) control" in which each of the intake valve 21 and the exhaust valve 22 is maintained in a closed state for a while during an exhaust stroke. In this case, by determining the valve opening timing of the intake valve 21 during an intake stroke according to the engine speed, it also becomes possible to enhance efficiency of the compression self-ignition combustion.

### LIST OF REFERENCE SIGNS

1: engine
10: PCM
18: cylinder
21: intake valve
22: exhaust valve
25: spark plug
67: injector
71: intake-side variable valve operating mechanism
72b: solenoid valve
72c: pressure chamber
72d: cam

## Claims

1. A control device for an engine, comprising a variable valve operating mechanism,
the variable valve operating mechanism comprises: a cam configured to be rotated in synchronization with a rotation of a crankshaft of the engine: and a pressure chamber internally filled with engine oil and configured such that an oil pressure of the engine oil is changed by a movement of the cam,
wherein the pressure chamber is configured such that the oil pressure to be applied to an intake valve of the engine can be controlled by opening and closing a hydraulic valve associated with the pressure chamber,
wherein the control device is operable, when the engine performs compression self-ignition combustion, and combusted gas and fresh air are mixed during an intake stroke, to control opening and closing timings of the hydraulic valve such that a valve opening timing of the intake valve during the intake stroke is retarded according to an engine load of the engine, and
wherein, when the engine load falls within a given low engine load range, the valve opening timing of the intake valve is increasingly retarded according to the engine load and as the engine load becomes higher, within a limit of a given timing, and, when the engine load is increased beyond the given low engine load range, the valve opening timing of the intake valve is fixed to the given timing.

2. The control device as recited in claim 1, wherein the given timing is increasingly advanced as an engine speed of the engine becomes higher.

3. The control device as recited in claim 1 or 2, which is operable to reduce an opening angle of a throttle valve of the engine when an engine speed of the engine exceeds a given rotational speed.

4. The control device as recited in any one of claims 1 to 3, which is operable to close an exhaust shutter valve of the engine when an engine speed of the engine exceeds a given rotational speed.

5. A control device for an engine, comprising a variable valve operating mechanism,
the variable valve operating mechanism comprises a pressure chamber internally filled with engine oil, the variable valve operating mechanism being configured to controllably set a valve opening timing of an intake valve of the engine by opening and closing a hydraulic valve associated with the pressure chamber so as to apply an oil pressure of the engine oil to the intake valve,
wherein the control device is operable, when an engine load of the engine falls within a given low engine load range, to open an exhaust valve of the engine during an exhaust stroke and during a subsequent intake stroke, and to control opening and closing timings of the hydraulic valve such that the valve opening timing of the intake valve during the intake stroke is increasingly retarded as the engine load becomes higher, within a limit of a given timing, and
wherein the control device is operable, when the engine load is increased beyond the given low engine load range, to control the opening and closing timings of the hydraulic valve such that the valve opening timing of the intake valve during the intake stroke is fixed to the given timing.
